# EUROPÄISCHE PATENTANMELDUNG

(11) **EP 2 023 101 A2**
(43) Veröffentlichungstag der Anmeldung: **11.02.2009**
(21) Anmeldenummer: 08013003.2
(22) Anmeldetag: 18.07.2008
(51) Int. Cl.: G01G 19/56

(54) **Handwaage, insbesondere für Kleinteile, Schüttgut, etc.**

(30) Priorität: 30.07.2007 DE 102007035948
(71) Anmelder: Soehnle Professional GmbH & Co. KG, 71522 Backnang (DE)
(72) Erfinder: Gerster, Stephan, 53343 Wachtberg-Pech (DE)
(74) Vertreter: Ullrich & Naumann

(57) **Zusammenfassung**

Eine Handwaage (1), insbesondere für Kleinteile, Schüttgut etc., mit einer Aufnahme (2) für das zu wiegende Gut und einem Handgriff (3), wobei zwischen der Aufnahme (2) und dem Handgriff (3) eine Messeinrichtung (4) wirkt, die zur Gewichtsbestimmung des Guts dient, zeichnet sich dadurch aus, dass die Aufnahme (2) vom Handgriff (3) lösbar ist.

## Beschreibung

Die Erfindung betrifft eine Handwaage, insbesondere für Kleinteile, Schüttgut etc., mit einer Aufnahme für das zu wiegende Gut und einem Handgriff, wobei zwischen der Aufnahme und dem Handgriff eine Messeinrichtung wirkt, die zur Gewichtsbestimmung des Guts dient.

Handwaagen der in Rede stehenden Art sind seit einigen Jahren aus der Praxis bekannt. Sie werden beispielsweise auf Märkten, in Lebensmittelgeschäften, in Restaurants, in der Industrie usw. eingesetzt, um Güter verschiedenster Art, insbesondere Kleinteile, Schüttgut, etc. mobil - also ortunabhängig - wiegen zu können. Lediglich beispielhaft sei dazu auf die DE 101 25 796 A1 verwiesen, die eine derartige Handwaage zeigt.

Bekannte Handwaagen weisen eine Aufnahme für das zu wiegende Gut (beispielsweise Lebensmittel, Biomasse, Eisenteile, Baustoffe, etc.) auf, die sich mittels eines Handgriffs halten lässt. Zur Gewichtsbestimmung des aufgenommenen Guts dient eine Messeinrichtung, die zwischen der Aufnahme und dem Handgriff wirkt. Die Messeinrichtung ist so konstruiert und angeordnet, dass diese in Abhängigkeit vom Gewicht des aufgenommenen Guts ein. Ausgangssignal erzeugt, woraus sich das Gewicht des gewogenen Guts bestimmen lässt.

Zumeist umfasst die Messeinrichtung eine Feder oder einen Federkörper, die bzw. der sich im elastischen Bereich annähernd proportional zur Kraftbeaufschlagung verformt. Der Grad der Verformung kann sich bspw. über eine Skala ablesen lassen, woraus das Gewicht des gewogenen Guts bestimmbar ist. Bevorzugt werden heutzutage elektronische Messeinrichtungen verwendet, bei denen mittels spezieller Funktionselemente statt eines rein mechanischen Ausgangssignals (z.B. Zeigerausschlag) ein elektrisches Ausgangssignal (z.B. eine Spannung) erzeugt wird, das sich wiederum elektronisch auswerten, verarbeiten, anzeigen lässt. Elektronische Messeinrichtungen bieten vor allem den Vorteil einer genaueren Darstellbarkeit des Messergebnisses und lassen sich leicht mit weiteren Funktionalitäten versehen.

Unabhängig von der konkreten technischen Ausführung der Messeinrichtung weisen bekannte Handwaagen in der Praxis den Nachteil auf, dass deren Aufnahme durch das ständige Befüllen bzw. Beladen mit zu wiegendem Gut verschmutzt. Insbesondere bei Verwendung der Handwaage für Lebensmittel, biologisches oder chemisches Material ist eine Verschmutzung jedoch zumeist nicht hinzunehmen. Die regelmäßige Reinigung herkömmlicher Handwaagen ist praktisch insbesondere dadurch erschwert, dass aneinandergrenzende Bereiche von Aufnahme und Handgriff, zwischen denen die Messeinrichtung wirkt, nur schwer zugänglich sind.

Als weiterer Nachteil bekannter Handwaagen wirkt sich aus, dass sich prinzipbedingt Aufnahme und Handgriff zur Ermöglichung der Gewichtsmessung zumindest geringfügig gegeneinander bewegen können müssen. Hierzu sind Bewegungsspalte, Gleit-, Wälzlagerungen und/oder dgl. nötig, von denen jedoch Reinigungsmittel fernzuhalten sind, um deren sichere und präzise Funktion nicht nachteilig zu beeinträchtigen. Dies erfordert in der Praxis eine deutlich erhöhte Aufmerksamkeit.

Der vorliegenden Erfindung liegt daher die Aufgabe zugrunde, eine Handwaage der eingangs genannten Art derart auszugestalten und weiterzubilden, dass diese sich einfach und gefahrlos reinigen lässt.

Erfindungsgemäß wird die voranstehende Aufgabe durch die Merkmale des Patentanspruchs 1 gelöst. Danach ist die in Rede stehende Handwaage **dadurch gekennzeichnet, dass** die Aufnahme vom Handgriff lösbar ist.

Erfindungsgemäß ist zunächst erkannt worden, dass bei herkömmlichen Handwaagen mit zunehmender Benutzungsdauer Verschmutzungen auftreten, was eine Benutzung insbesondere in hygienekritischen Bereichen erschwert. Erfindungsgemäß ist weiterhin erkannt worden, dass insbesondere die Messeinrichtung sowie daran angrenzende Bereiche von Aufnahme und Handgriff schwer zugänglich und daher schwer zu reinigen sind.

Erfindungsgemäß ist zur Lösung der erkannten Probleme eine überraschend einfache Lösung gefunden worden, wonach die Aufnahme vom Handgriff lösbar ist. Hierbei wurde erkannt, dass bei Verwendung der Handwaage insbesondere die Aufnahme mit dem zu wiegenden Gut in Kontakt kommt. Die stärksten Verschmutzungen treten daher an der Aufnahme auf. Durch die erfindungsgemäße lösbare Gestaltung der Aufnahme gegenüber dem Handgriff lässt sich die vom Handgriff gelöste Aufnahme gefahrlos und allseitig von Verschmutzungen befreien, so dass sich nach dem Wiegen unterschiedlichster Güter stets ein hygienisch einwandfreier Zustand wiederherstellen lässt.

Weiterer Vorteil der erfindungsgemäßen Lösung ist, dass durch die Lösbarkeit gleichzeitig eine Austauschbarkeit der Aufnahme ermöglicht ist. So könnten beispielsweise mehrere, ggf. verschiedene Aufnahmen mit einem Handgriff verwendet werden. Diese könnten in vorteilhafter Weise für verschiedene Arten von Gütern vorgesehen sein, wodurch Verunreinigungen nach dem Wiegen unterschiedlicher Güter vermieden werden.

In einer möglichen Weiterbildung der Erfindung ist die Messeinrichtung der Aufnahme zugeordnet. An der Aufnahme könnte in diesem Fall eine spezifische Messeinrichtung, die sich bspw. für das zu wiegende Gut besonders eignet, befestigt sein. Dem Handgriff käme dann im Wesentlichen eine Haltefunktion zu.

In einer bevorzugten Weiterbildung der Erfindung ist die Messeinrichtung dem Handgriff zugeordnet, wobei die Messeinrichtung vorzugsweise an diesem befestigt ist. Durch eine derartige Zuordnung umfasst der Handgriff also die Messeinrichtung, wodurch nach Lösung der Aufnahme vom Handgriff vor allem eine unproblematische Reinigung der Aufnahme möglich ist. Eine technisch einfache Zuordnung der Messeinrichtung zum Handgriff ließe sich realisieren, indem die Messeinrichtung an diesem befestigt ist.

Zur Gewichtsbestimmung des zu wiegenden Guts ist es zweckmäßig, dass die Messeinrichtung einen Kraftsensor aufweist. Neben der eingangs erwähnten Feder kann es sich dabei um jedweden zur Erfassung von Kraft einsetzbaren Sensor handein. Eine technische Realisierung wird zumeist durch einen oder mehrere elastisch verformbare Körper gegeben, deren Verformung ein elektrisches, elektronisches oder mechanisches Ausgangssignal erzeugt. Zur Erzeugung eines elektrischen Signals könnte die Messeinrichtung in vorteilhafter Weise eine sogenannte Wägezelle aufweisen. Selbstverständlich können auch mehrere Wägezellen vorgesehen sein, die auf unterschiedliche Weise funktional kombiniert sein können.

Zur Ermöglichung der Lösbarkeit der Aufnahme gegenüber dem Handgriff weist der Handgriff einen Kupplungsbereich auf, der komplementär zu einem an der Aufnahme ausgebildeten Anschlussbereich ausgebildet ist. Durch die komplementäre Ausbildung von Kupplungsbereich und Anschlussbereich ist ein gegenseitiger Eingriff ermöglicht, wodurch die Aufnahme auf einfache Weise mit dem Handgriff in Verbindung bringbar ist. Der Anschlussbereich wird zu diesem Zweck beispielsweise mit dem Kupplungsbereich zusammengesteckt, verhakt, verklemmt, in diesen eingesteckt, mit diesem verspannt oder dgl., wodurch sich jeweils eine form- und oder kraftschlüssige Verbindung ergibt. Kombinationen genannter sowie sonstiger bekannter Verbindungstechniken sind denkbar. Im bevorzugten Fall, wobei die Messeinrichtung dem Handgriff zugeordnet ist, ist der Kupplungsbereich, mit welchem der Anschlussbereich der Aufnahme in Verbindung gebracht wird, so angeordnet, dass dieser unmittelbar oder mittelbar auf die Messeinrichtung wirkt. Durch eine derartige Anordnung ist gewährleistet, dass das Gewicht des in der Aufnahme befindlichen Guts von der Messeinrichtung erfasst wird.

In einer weiteren Ausgestaltung könnte dazu der Kupplungsbereich an einem Kupplungselement ausgebildet sein, das mittels der Messeinrichtung gegenüber dem Handgriff gelagert ist. Verschiedenste geometrische Ausgestaltungsformen sowie mechanische Verbindungsprinzipien lassen sich realisieren, wobei in einer besonders vorteilhaften Weiterbildung der Anschlussbereich derart gestaltet ist, dass dieser das Kupplungselement in verbundenem Zustand zumindest teilweise umschließt. Auf diese Weise kann eine einfach lösbare, formschlüssige Verbindung erzielt werden, die jedoch gleichzeitig eine sichere Kraftübertragung ermöglicht.

Die beschriebene Verbindungstechnik lässt sich dadurch vorteilhaft ergänzen, dass der Anschlussbereich vorzugsweise in dessen oberem Abschnitt ein hakenähnliches Halteelement aufweist, das zum Einhängen an das Kupplungselement dient. Ein derartiges hakenähnliches Halteelement dient in vorteilhafter Weise dazu, den Kupplungsvorgang, also das Anstecken der Aufnahme an den Haltegriff, durch einen Anschlag zu begrenzen. Das hakenähnliche Halteelement ist zu diesem Zweck vorzugsweise im oberen Abschnitt des Anschlussbereichs vorgesehen, so dass die Aufnahme bereits durch ihre Gewichtskraft gegenüber dem Kupplungselement gesichert ist.

Zur weiteren Sicherung der Verbindung weist bei einer günstigen Weiterbildung der Erfindung das Kupplungselement oder der Anschlussbereich einen Arretierungsmechanismus auf, der zur Sicherung der Verbindung von Aufnahme und Handgriff dient. Es kann sich hierbei um eine Schnapp-, Rast-, Schraub-, Klemmarretierung oder dgl. handeln, wobei eine einfache Bedienbarkeit und Zugänglichkeit gewährleistet sein sollte.

Zweckmäßigerweise weist der Anschlussbereich oder das Kupplungselement vorzugsweise in dessen unterem Abschnitt ein Eingriffselement auf, das sich mit diesem Arretierungsmechanismus sichern lässt. Das Eingriffselement wirkt demzufolge mit dem Arretierungsmechanismus zusammen und ist zu diesem Zweck komplementär zu diesem ausgebildet. Handelt es sich bei dem Arretierungsmechanismus bspw. um einen am Kupplungselement ausgebildeten Schnapphaken, so könnte das Eingriffselement als am Anschlussbereich vorgesehene Haltelasche ausgeführt sein, in welche der Schnapphaken zur Arretierung eingreift.

In vorteilhafter Weise ist bei der Handwaage die Messeinrichtung gegenüber der Umgebung abgedichtet. Dazu sind Abdichtungen aus Silikon, Kautschuk, Gummi und dergleichen denkbar. Eine Abdichtung der Messeinrichtung kann zum Schutz vor Staub, Feuchtigkeit, mechanischen Einflüssen, Reinigungsmitteln, hoher Temperatur oder dgl. vorgesehen sein, wozu die Messeinrichtung bspw. auch gekapselt ausgeführt sein kann.

Da - wie bereits erläutert - die Messeinrichtung, insbesondere der Kraftsensor sowie ggf. damit zusammenwirkende mechanische Elemente ein mechanisches Spiel erfordern, ist in einer besonders vorteilhaften Weiterbildung der Erfindung zwischen dem Kupplungselement und dem Handgriff eine Abdichtung angeordnet, welche vorzugsweise die Messeinrichtung umhüllt. Die Abdichtung kann bspw. durch einen Faltenbalg, einen Gummischlauch, Silikonschlauch oder dgl. realisiert sein.

Hinsichtlich der Ausführung der Aufnahme sind unterschiedlichste Gestaltungsmöglichkeiten denkbar. Eine vielseitige Verwendbarkeit der Handwaage wird erzielt, wenn die Aufnahme im Wesentlichen in Form eines offenen Behältnisses ausgebildet ist. Das zu wiegende Gut lässt sich in diesem Fall einfach in die Aufnahme einfüllen, aus der Aufnahme entnehmen bzw. ausschütten sowie bei Bedarf - aufgrund der Mobilität der Handwaage - in der Aufnahme transportieren. Es bieten sich Ausführungen in Form einer Schaufel, eines Kastens, eines Löffels, Siebs oder dgl. an, wodurch sich entsprechende Nutzungsmöglichkeiten ergeben. Durch eine Ausführung in Siebform, d.h. zumindest mit siebartigem Boden, oder als Netz ist eine Verwendung als Kescher (Fischerei) möglich.

Unabhängig Anwendungsgebiet kann es von Vorteil sein, dass der Schwerpunkt der Aufnahme durch deren Formgebung nahe der Messeinrichtung und/oder dem Handgriff liegt. Durch eine Nähe des Aufnahmeschwerpunkts zum Handgriff können auch relativ schwere Güter mühelos gehalten werden, d.h. ohne am Handgriff zu hohe Kippmomente zu erzeugen. Durch die Nähe des Aufnahmeschwerpunkts zur Messeinrichtung greift die Gewichtskraft der Aufnahme nahe der Messeinrichtung an, was zur Reduzierung von Messfehlern beiträgt. Die angesprochene schwerpunktsnahe Formgebung der Aufnahme lässt sich vorteilhaft durch eine zumindest teilweise nierenähnliche Form des Aufnahmekörpers realisieren, wobei der Handgriff und die Messeinrichtung an der inneren Krümmungsseite angeordnet sind, also teilweise von der Aufnahme umschlossen sind.

Eine einfache Formgebung der Aufnahme lässt sich kostengünstig erzielen, wenn die Aufnahme aus Kunststoff hergestellt ist. Durch Guss bzw. Spritzguss lassen sich unterschiedlichste Formgebungen der Aufnahme kostengünstig erzeugen, wobei gleichzeitig ein geringes Gewicht bei hinreichender Festigkeit erzielt wird.

In einer weiterhin vorteilhaften Weiterbildung der Erfindung ist der Handgriff als integraler Bestandteil eines Gehäuses ausgeführt. In diesem Fall können weitere Funktionselemente der Handwaage in den Handgriff bzw. in das Gehäuse integriert sein. Bspw. ließe sich die Messeinrichtung vollständig oder zumindest teilweise in einem derartigen Gehäuse anordnen. Eine kompakte Bauform der Handwaage ließe so realisieren, wobei gleichzeitig ein besonderer Schutz von Komponenten der Messeinrichtung vor Schmutz, Feuchtigkeit und dgl. gewährleistet wäre.

In einer bevorzugten Weiterbildung der Erfindung weist die Handwaage elektrische und/oder elektronische Funktionselemente auf. Hierbei kann es sich beispielsweise um Anzeigeelemente, Bedienelemente, eine Rechnereinheit und der dergleichen handeln, wodurch wiederum eine Energieversorgung erforderlich sein kann. Zu diesem Zweck könnte eine unabhängige Energiequelle, vorzugsweise ein Akku, eine Batterie oder eine Solarzelle vorgesehen sein, die eine Versorgung mit elektrischem Strom gewährleistet. Bei Ausführung des Handgriffs als integraler Bestandteil eines Gehäuses könnte diese Energiequelle vorteilhaft in dem Gehäuse oder an dem Gehäuse angeordnet sein.

Für die Handwaage kann weiterhin ein Neigungssensor vorgesehen sein, der Neigungsdaten erzeugt, welche die Handwaage zur Gewichtsbestimmung des Guts berücksichtigt. Ein derartiger Neigungssensor könnte in vorteilhafter Weise ebenso in einem ggf. vorgesehenen Gehäuse untergebracht sein. Dabei erfasst der Neigungssensor die Winkelstellung der Handwaage bspw. gegenüber der Schwerkraftrichtung und kann auf diese Weise eine Schrägstellung der Handwaage kompensieren, welche zu Verfälschungen der Gewichtsmessung führen würde.

Eine weitere Funktionalität könnte die Handwaage aufweisen, indem zur Gewichtsbestimmung mehrerer gewogener Güter eine Additions- und/oder Subtraktionsfunktion vorgesehen ist. In diesem Fall umfasst die Messeinrichtung oder eine ggf. zusätzlich vorgesehene Steuereinheit einen Datenspeicher sowie einen Rechner, um Messergebnisse zu addieren bzw. zu subtrahieren.

Es kann zweckmäßig sein, dass die Handwaage eine Anzeigeeinheit zur Wiedergabe ermittelter Gewichtswerte, Warenkenndaten und/oder sonstigen Informationen (Uhrzeit, Datum, gewichtsspezifischer Preis etc.) aufweist. Bei einer derartigen Anzeigeeinheit kann es sich um eine analoge oder digitale Einrichtung handeln, was je nach Ausführungsform der Handwaage zweckmäßig sein kann.

Es gibt nun verschiedene Möglichkeiten, die Lehre der vorliegenden Erfindung in vorteilhafter Weise auszugestalten und weiterzubilden. Dazu ist einerseits auf die dem Patentanspruch 1 nachgeordneten Patentansprüche und andererseits auf die nachfolgende Erläuterung eines bevorzugten Ausführungsbeispiels der Erfindung anhand der Zeichnung zu verweisen. In Verbindung mit der Erläuterung des bevorzugten Ausführungsbeispiels der Erfindung anhand der Zeichnung werden auch im Allgemeinen bevorzugte Ausgestaltungen und Weiterbildungen der Lehre erläutert.

In der Zeichnung zeigen
- Fig. 1: ein Ausführungsbeispiel der erfindungsgemäßen Handwaage in perspektivischer Ansicht von schräg vorn,
- Fig. 2: die Handwaage aus Fig. 1 in perspektivischer Ansicht von schräg hinten,
- Fig. 3: den Handgriff der Handwaage aus Fig. 1 in perspektivischer Ansicht von schräg vorn (ohne Stimplatte),
- Fig. 4: den Handgriff aus Fig. 3 in perspektivischer Ansicht von schräg vorn (mit Stimplatte und geöffnetem Arretierungsmechanismus),
- Fig. 5: den Handgriff aus Fig. 4 aus perspektivischer Ansicht von schräg vom (mit Stimplatte und geschlossenem Arretierungsmechanismus),
- Fig. 6: eine Kupplungseinheit zur lösbaren Verbindung von Aufnahme und Handgriff in perspektivischer Ansicht, und
- Fig. 7: die Aufnahme der Handwaage aus Fig. 1 in perspektivischer Ansicht von schräg hinten.

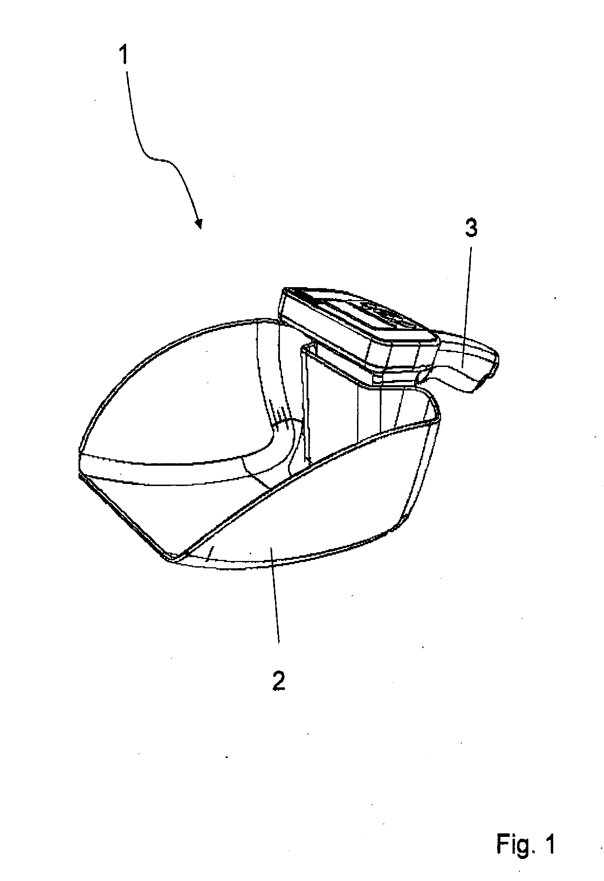

Fig. 1 zeigt ein Ausführungsbeispiel einer erfindungsgemäßen Handwaage 1 von schräg vorn. Die Handwaage 1 weist eine schaufelförmige Aufnahme 2 und einen Handgriff 3 auf. Zu wiegendes Gut wie beispielsweise Schüttgut kann in die Aufnahme gegeben werden oder in die Aufnahme geschaufelt werden, um anschließend in der Aufnahme gewogen, aufbewahrt und/oder zu beliebigem Zweck an einen anderen Ort transportiert zu werden. Die Aufnahme 2 ist aus schlagfestem Kunststoff hergestellt, wodurch sich ein relativ geringes Gewicht und eine ausreichende Festigkeit ergeben.

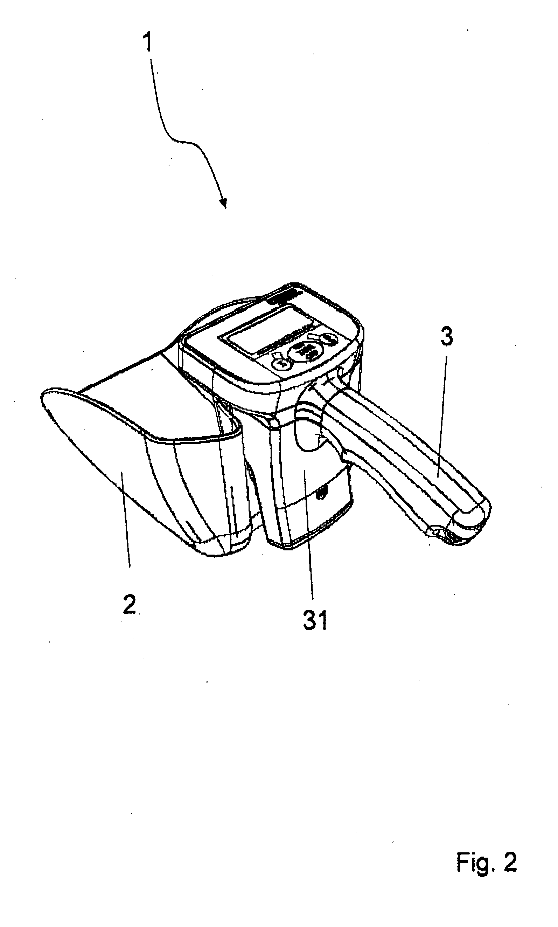

In Fig. 2 ist zu sehen, dass der Handgriff 3 der Handwaage 1 einen zum Ergreifen mit der Hand ergonomisch ausgeformten Griff aufweist, der integraler Bestandteil eines Gehäuses 31 ist. Auf der Oberseite des Gehäuses 31 ist eine Anzeigeeinheit mit einem LCD-Display und drei Bedientasten angeordnet. Die Bedientasten lassen sich durch einfaches Antippen betätigen und können beispielsweise zum Ein- bzw. Ausschalten, zur Tarierung, zur Umstellung der Messeineinheit und/oder zur Auslösung der Additions- bzw. Subtraktionsfunktion der Handwaage 1 dienen. Eine elektronische Datenverarbeitungseinheit wirkt mit Anzeige, Bedientasten und Messeinrichtung zusammen. Zur Versorgung der Komponenten mit elektrischem Strom ist im Bodenbereich des Gehäuses 31 ein Batteriefach vorgesehen, in das sich Batterien oder Akkus einsetzen lassen. Ein Ladeanschluss kann weiterhin am Gehäuse 31 vorgesehen sein.

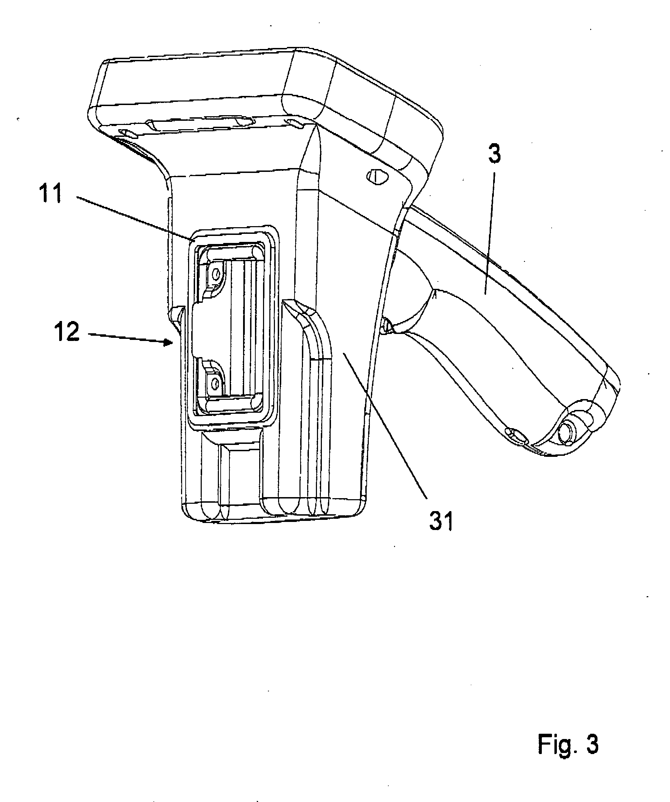

Fig. 3 zeigt den integral mit dem Gehäuse 31 ausgebildeten Handgriff 3, wobei zu sehen ist, dass an der Stimseite des Gehäuses 31 eine in etwa rechteckige Ausnehmung 11 vorgesehen ist. Durch diese Ausnehmung 11 ist eine Kupplungseinheit 12 in das Gehäuse 31 eingelassen, die letztlich zur Verbindung der Aufnahme 2 mit dem Handgriff 3 dient.

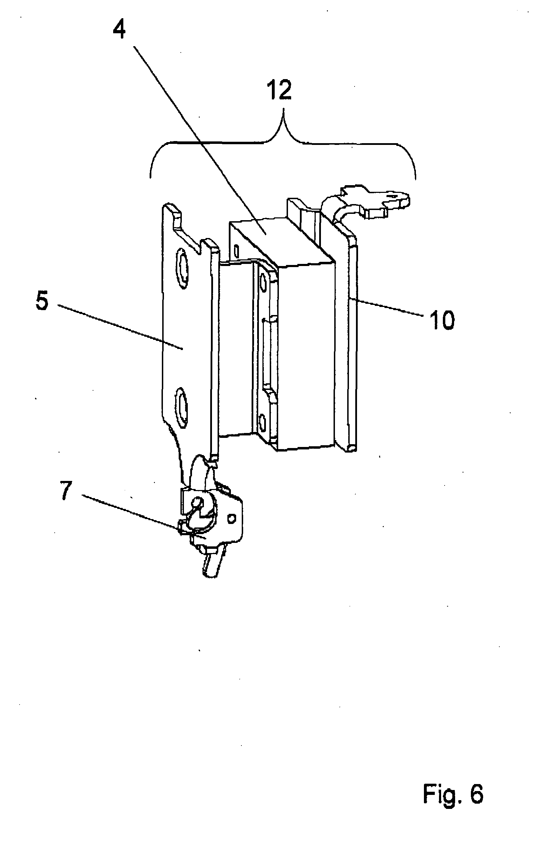

Wie Fig. 6 zeigt, besteht die Kupplungseinheit 12 aus einer Befestigungsplatte 10, einer Messeinrichtung 4, einem Kupplungselement 5 sowie einem Arretierungsmechanismus 7. In der Darstellung aus Fig. 3 ist die Stirnplatte des Kupplungselements 5 sowie der daran befestigte Arretierungsmechanismus 7 aus Gründen einer besseren Darstellung weggelassen worden.

Im zusammengebauten Zustand ist die Kupplungseinheit 12 mittels der Verbindungsplatte 10 am Gehäuse 31 des Handgriffs 3 befestigt, wozu die Verbindungsplatte 10 einen oben rechtwinklig abragenden Anschlussflansch aufweist. An der Verbindungsplatte 10 ist die Messeinrichtung 4 befestigt, bei der es sich um eine Wägezelle handelt. Diese verformt sich unter Kraftbeaufschlagung elastisch, wodurch ein davon abhängiges elektrisches Signal erzeugt wird, das zur Bestimmung des Gewichts dient. Zur Krafteinleitung an der Messeinrichtung 4 ist das Kupplungselement 5 an einer Wirkfläche der Messeinrichtung 4 befestigt. Aufgrund der gezeigten Anordnung ergibt sich bei der Gewichtsmessung jeweils eine Querbeanspruchung der Messeinrichtung 4, also eine Scherung der Wägezelle.

Wie Fig. 6 zu entnehmen, umfasst das Kupplungselement 5 eine im Wesentlichen rechteckige Stimfläche, die als Kupplungsbereich komplementär zu einem an der Aufnahme 2 ausgebildeten Anschlussbereich 6 ausgebildet ist. Die Stimfläche des Kupplungselements 5 ist über ein Verbindungsstück mit der Messeinrichtung 4 verschraubt. Im unteren Bereich des Kupplungselements 5 ist ein Arretierungsmechanismus 7 angeordnet, der eine Schnappmechanik umfasst.

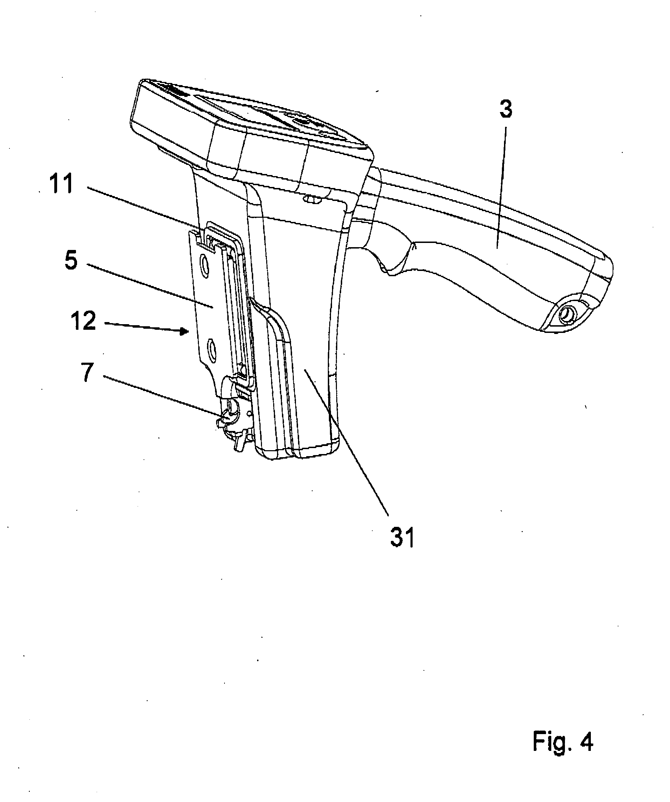

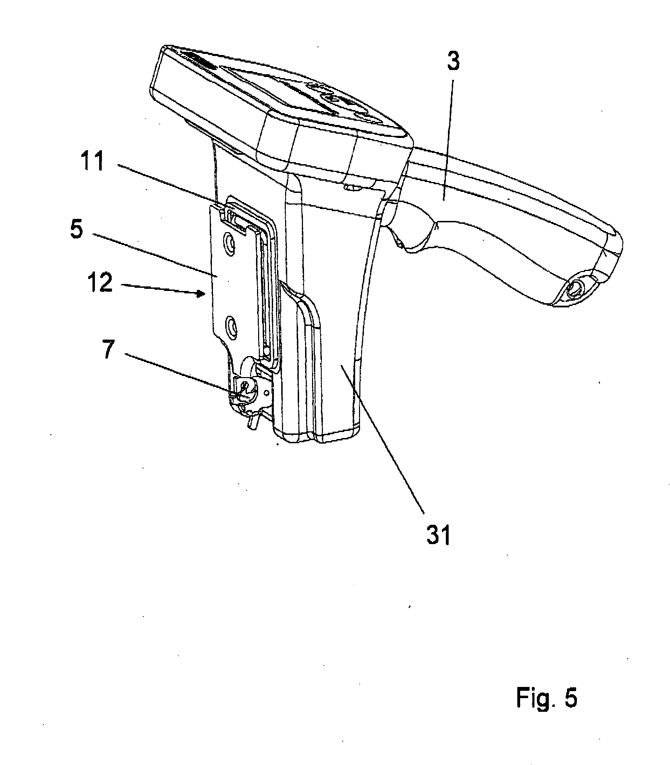

In den Fig. 4 und 5 ist jeweils der Handgriff 3 mit der eingebauten vollständigen Kupplungseinheit 12 dargestellt. Dabei zeigt Fig. 4 den Arretierungsmechanismus 7 im geöffneten Zustand, während Fig. 5 die geschlossene Stellung des Arretierungsmechanismus 7 zeigt. In beiden Darstellungen ist zu sehen, dass die Stirnplatte des Kupplungselements 5 sowie der daran befestigte Arretierungsmechanismus 7 aus dem Gehäuse 31 etwas hinausragen, Die übrigen Komponenten der Kupplungseinheit 12 liegen dagegen im Gehäuse 31 und sind daher nicht sichtbar. Zwischen dem Kupplungselement 5, insbesondere der Stirnplatte, und dem Gehäuse 31, vorzugsweise der Ausnehmung 11, kann in vorteilhafter Weise eine Abdichtung vorgesehen sein, welche die zur Gewichtsmessung nötige Beweglichkeit des Kupplungselements 5 gegenüber der Befestigungsplatte 10 praktisch nicht einschränkt, gleichzeitig jedoch die Messeinrichtung 4 und/oder das gesamte Gehäuse 31 vor Staub, Schmutz bzw. Feuchtigkeit abdichtet. Die Abdichtung kann als Faltenbalg, Manschette der dergleichen ausgeführt sein.

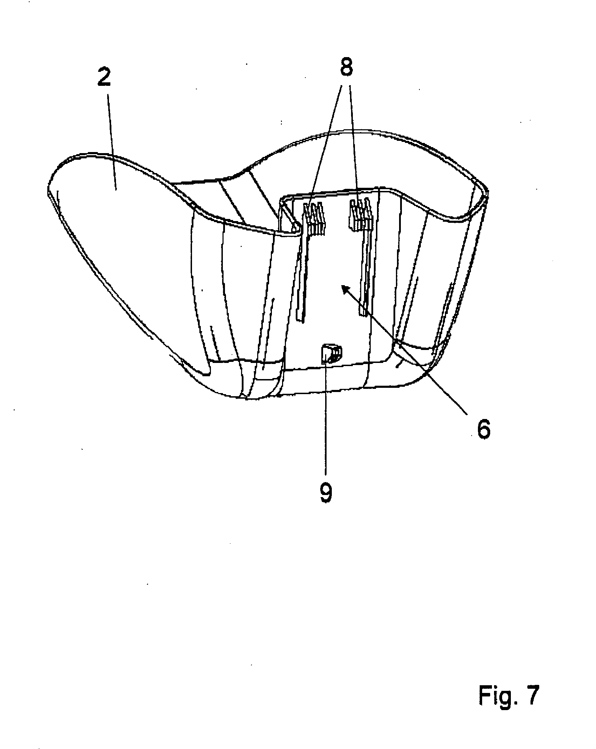

Schließlich zeigt Fig. 7 die schaufelartige Aufnahme 2 von schräg hinten. Die Aufnahme 2 weist eine zumindest teilweise nierenartige Grundform auf, wodurch der Schwerpunkt der Aufnahme 2 nahe dem Handgriff 3 und nahe der Messeinrichtung 4 liegt. Zu sehen ist, dass die Aufnahme 2 an deren Rückenfläche einen Anschlussbereich 6 aufweist, der komplementär zum Kupplungsbereich (am Kupplungselement 5) des Handgriffs 3 ausgebildet ist. Die Aufnahme 2 lässt sich daher - wie in Fig. 1 gezeigt - auf einfache Weise mit dem Handgriff 3 in Verbindung bringen und von diesem lösen.

Zur Gewährleistung einer einfachen Lösbarkeit weist dazu, wie in Fig. 7 zu sehen, der Anschlussbereich 6 in dessen oberem Abschnitt zwei zueinander achsensymmetrisch angeordnete Halteelemente 8 auf, die an den einander zugewandten Bereichen hakenähnlich ausgebildet sind. Die Halteelemente 8 lassen sich in Eingriff mit dem Kupplungselement 5 bringen, wobei die seitlichen Stege der Halteelemente 8 einen Seitenhalt gewährleisten, während die hakenähnlichen Abschnitte über die Oberkante der Stirnplatte des Kupplungselements 5 greifen. Zur Befestigung der Aufnahme 2 an dem Handgriff 3 wird demnach zunächst der obere Abschnitt des Anschlussbereichs 6 an der Oberkante des Kupplungselements 5 eingehängt. Danach erfolgt durch Schwenken um die durch die Halteelemente 8 vorgegebene Schwenkachse der Eingriff eines im unteren Anschlussbereich 6 vorgesehenen Eingriffselements 9 in den Arretierungsmechanismus 7. Eine sichere Verbindung zwischen Aufnahme 2 und Haltegriff 3, die leicht zu lösen ist, wird so gewährleistet.

Hinsichtlich weiterer vorteilhafter Ausgestaltungen der erfindungsgemäßen Handwaage wird zur Vermeidung von Wiederholungen auf den allgemeinen Teil der Beschreibung sowie auf die beigefügten Patentansprüche verwiesen.

Schließlich sei ausdrücklich darauf hingewiesen, dass das voranstehend beschriebene Ausführungsbeispiel der erfindungsgemäßen Handwaage lediglich zur Erörterung der beanspruchten Lehre dient, diese jedoch nicht auf das Ausführungsbeispiel einschränkt.

### Bezugszeichenliste

- 1: Handwaage
- 2: Aufnahme
- 3: Handgriff
- 4: Messeinrichtung
- 5: Kupplungselement
- 6: Anschlussbereich
- 7: Arretierungsmechanismus
- 8: Halteelement
- 9: Eingriffselement
- 10: Befestigungsplatte
- 11: Ausnehmung
- 12: Kupplungseinheit
- 31: Gehäuse

## Patentansprüche

1. Handwaage (1), insbesondere für Kleinteile, Schüttgut etc., mit einer Aufnahme (2) für das zu wiegende Gut und einem Handgriff (3), wobei zwischen der Aufnahme (2) und dem Handgriff (3) eine Messeinrichtung (4) wirkt, die zur Gewichtsbestimmung des Guts dient,
**dadurch gekennzeichnet, dass** die Aufnahme (2) vom Handgriff (3) lösbar ist.

2. Handwaage nach Anspruch 1, **dadurch gekennzeichnet, dass** die Messeinrichtung (4) der Aufnahme (2) oder dem Handgriff (3) zugeordnet ist, wobei die Messeinrichtung (4) vorzugsweise an dieser bzw. an diesem befestigt ist.

3. Handwaage nach Anspruch 1 oder 2, **dadurch gekennzeichnet, dass** die Messeinrichtung (4) einen Kraftsensor, insbesondere eine Wägezelle, aufweist.

4. Handwaage nach einem der Ansprüche 1 bis 3, **dadurch gekennzeichnet, dass** der Handgriff (3) einen Kupplungsbereich aufweist, der komplementär zu einem an der Aufnahme (2) ausgebildeten Anschlussbereich (6) ausgebildet ist, wobei der Kupplungsbereich an einem Kupplungselement (5) ausgebildet sein kann, das mittels der Messeinrichtung (4) gegenüber dem Handgriff (3) gelagert ist und wobei der Anschlussbereich (6) das Kupplungselement (5) im verbundenen Zustand zumindest teilweise umschließen kann.

5. Handwaage nach Anspruch 4, **dadurch gekennzeichnet, dass** der Anschlussbereich (6) vorzugsweise in dessen oberem Abschnitt ein hakenähnliches Halteelement (8) aufweist, das zum Einhängen an das Kupplungselement (5) dient und/oder dass das Kupplungselement (5) oder der Anschlussbereich (6) einen Arretierungsmechanismus (7) aufweist, der zur Sicherung der Verbindung von Aufnahme (2) und Handgriff (3) dient, wobei der Anschlussbereich (6) oder das Kupplungselement (5) vorzugsweise in dessen unterem Abschnitt ein Eingriffselement (9) aufweisen kann, das sich mit dem Arretierungsmechanismus (7) sichem lässt.

6. Handwaage nach einem der Ansprüche 1 bis 5, **dadurch gekennzeichnet, dass** die Messeinrichtung (4) gegenüber der Umgebung abgedichtet ist.

7. Handwaage nach einem der Ansprüche 4 bis 6, **dadurch gekennzeichnet, dass** zwischen dem Kupplungselement (5) und dem Handgriff (3) eine Abdichtung angeordnet ist, welche vorzugsweise die Messeinrichtung (4) umhüllt.

8. Handwaage nach einem der Ansprüche 1 bis 7, **dadurch gekennzeichnet, dass** die Aufnahme (2) im Wesentlichen in Form eines offenen Behältnisses, vorzugsweise Schaufel, Kasten, Löffel, Sieb oder dergleichen, ausgebildet ist.

9. Handwaage nach einem der Ansprüche 1 bis 8, **dadurch gekennzeichnet, dass** der Schwerpunkt der Aufnahme (2) durch deren Formgebung nahe der Messeinrichtung (4) und/oder dem Handgriff (3) liegt.

10. Handwaage nach einem der Ansprüche 1 bis 9, **dadurch gekennzeichnet, dass** die Aufnahme (2) aus Kunststoff hergestellt ist.

11. Handwaage nach einem der Ansprüche 1 bis 10, **dadurch gekennzeichnet, dass** der Handgriff (3) als integraler Bestandteil eines Gehäuses (31) ausgeführt ist und/oder dass in den Handgriff (3) bzw. in das Gehäuse (31) Funktionselemente der Handwaage (1) integriert sind.

12. Handwaage nach einem der Ansprüche 1 bis 11, **dadurch gekennzeichnet, dass** eine unabhängige Energiequelle, vorzugsweise ein Akku oder eine Batterie, vorgesehen ist.

13. Handwaage nach einem der Ansprüche 1 bis 12, **dadurch gekennzeichnet, dass** ein Neigungssensor vorgesehen ist, der Neigungsdaten erzeugt, welche die Handwaage (1) zur Gewichtsbestimmung des Guts berücksichtigt.

14. Handwaage nach einem der Ansprüche 1 bis 13, **dadurch gekennzeichnet, dass** zur Gewichtsbestimmung mehrere gewogener Güter eine Additions- und/oder Subtraktionsfunktion vorgesehen ist.

15. Handwaage nach einem der Ansprüche 1 bis 14, **dadurch gekennzeichnet, dass** eine Anzeigeeinheit zur Wiedergabe ermittelter Gewichtswerte und/oder Warenkenndaten vorgesehen ist.
